# EUROPÄISCHE PATENTSCHRIFT

(11) **EP 4 147 015 B1**
(45) Veröffentlichungstag und Bekanntmachung des Hinweises auf die Patenterteilung: **27.03.2024**
(21) Anmeldenummer: 21720709.1
(22) Anmeldetag: 19.04.2021
(51) Int. Cl.: G01F 1/84

(54) **VERFAHREN ZUR INBETRIEBNAHME EINES CORIOLIS-DURCHFLUSSMESSGERÄTES**
METHOD OF STARTING UP A CORIOLIS FLOW METER
PROCÉDÉ DE MISE EN SERVICE D'UN DÉBITMÈTRE CORIOLIS

(30) Priorität: 05.05.2020 DE 102020112154
(43) Veröffentlichungstag der Anmeldung: 15.03.2023
(73) Patentinhaber: Endress + Hauser Flowtec AG, 4153 Reinach (CH)
(72) Erfinder: BITTO, Ennio, 4147 Aesch (CH); ANKLIN, Martin Josef, 4143 Dornach (CH); SCHWENTER, Benjamin, 4226 Breitenbach (CH)
(74) Vertreter: Penner, Paul
(86) Internationale Anmeldenummer: PCT/EP2021/060047
(87) Internationale Veröffentlichungsnummer: WO 2021/223989

(56) Entgegenhaltungen:
- EP-A1- 3 495 784
- WO-A1-2019/017891
- DE-A1-102018 119 332
- US-A1- 2010 005 906
- US-A1- 2017 146 380

## Beschreibung

Die Erfindung betrifft ein Verfahren zur Inbetriebnahme eines Coriolis-Durchflussmessgerätes, insbesondere eines Coriolis-Durchflussmessgerätes für bevorzugt pharmazeutische Bioprozessanwendungen.

Feldgeräte der Prozessmesstechnik mit einem Messaufnehmer vom Vibrationstyp und besonders Coriolis-Durchflussmessgeräte sind seit vielen Jahren bekannt. Der grundsätzliche Aufbau eines solchen Messgerätes wird beispielsweise in der EP 1 807 681 A1 beschrieben.

Typischerweise weisen Coriolis-Durchflussmessgeräte zumindest ein oder mehrere schwingfähige Messrohre auf, welche mittels eines Schwingungserregers in Schwingung versetzt werden können. Diese Schwingungen übertragen sich über die Rohrlänge und werden durch die Art des im Messrohr befindlichen fließfähigen Mediums und dessen Durchflussgeschwindigkeit variiert. Ein Schwingungssensor oder insbesondere zwei voneinander beabstandete Schwingungssensoren können an einer anderen Stelle des Messrohres die variierten Schwingungen in Form eines Messsignals oder mehrerer Messsignale aufnehmen. Aus dem oder den Messsignalen kann eine Auswerteeinheit sodann den Massedurchfluss, die Viskosität und/oder die Dichte des Mediums ermitteln.

Es sind Coriolis-Durchflussmessgeräte mit austauschbaren Einweg-Messrohranordnungen bekannt. So wird beispielsweise in der WO 2011/099989 A1 ein Verfahren zur Herstellung einer monolithisch ausgebildeten Messrohranordnung eines Coriolis-Durchflussmessgerätes mit gebogenen Messrohren gelehrt, wobei der Messrohrkörper der jeweiligen Messrohre zuerst massiv aus einem Polymer gebildet und der Kanal zum Führen des fließfähigen Mediums anschließend spannend eingearbeitet wird. Die WO 2011/099989 A1 lehrt -ebenso wie die US 10,209,113 B2 - einen Verbindungskörper, welcher dazu eingerichtet ist eine auswechselbare Messrohranordnung, umfassend dünnwandige Kunststoffrohre, aufzunehmen und zu stützen. Die Befestigung der Messrohranordnung in einer mit den notwendigen Erregern und Sensoren ausgestatteten Trägervorrichtung erfolgt über den Verbindungskörper. Die WO 2019/017891 A1 offenbart ein auswechselbares Coriolis-Durchflussmessgerät, bei dem ein Messrohrmodul über eine Befestigungsvorrichtung mit einem Gehäuse und einer im Gehäuse angeordneter Trockenvorrichtung, in welcher die Spulen angeordnet sind, wieder trennbar befestigt wird.

Die mechanischen Eigenschaften der, für Coriolis-Durchflussmessgeräte geeigneten Messrohranordnungen können stark variieren, daher müssen spezifische Kenngrößen wie Kalibrationsfaktor und Nullpunkt vor dem Einsatz in einem Coriolis-Durchflussmessgerät ermittelt werden. Es hat sich herausgestellt, dass der im Justierverfahren bestimmte Nullpunkt in der Regel von dem tatsächlichen Nullpunkt der austauschbaren Messrohranordnung im Einsatz abweicht. Eine derartige Abweichung lässt sich nur schwer korrigieren. Ein Grund dafür liegt darin, dass die Abweichung vom Grad der Befestigung der Messrohranordnung in der Trägervorrichtung abhängt, was sich nur schwer für unterschiedliche Bediener reproduzieren lässt.

Der Erfindung liegt die Aufgabe zugrunde ein Verfahren zur Inbetriebnahme des Coriolis-Durchflussmessgerätes bereitzustellen, mit dem die Abweichungen reduziert wird.

Die Aufgabe wird gelöst durch das Verfahren nach Anspruch 1.

Das erfindungsgemäße Verfahren zur Inbetriebnahme eines Coriolis-Durchflussmessgerätes, insbesondere eines Coriolis-Durchflussmessgerätes für bevorzugt pharmazeutische Bioprozessanwendungen,
wobei das Coriolis-Durchflussmessgerät umfasst:
   - eine Messrohranordnung,
wobei die Messrohranordnung mindestens ein, von einem Medium durchströmbares Messrohr umfasst;
   - mindestens einen Schwingungserreger, welcher dazu eingerichtet ist, die Messrohranordnung, insbesondere das Messrohr zu Schwingungen anzuregen, insbesondere umfassend einen Erregermagneten und eine Erregerspule;
wobei zumindest eine Komponente des Schwingungserregers, insbesondere der Erregermagnet am Messrohr angeordnet ist;
   - mindestens einen Schwingungssensor, welcher dazu eingerichtet ist, die Schwingungen des mindestens einen Messrohres zu erfassen, insbesondere umfassend einen Sensormagneten und eine Sensorspule,
wobei zumindest eine Komponente des Schwingungssensors, insbesondere der Sensormagnet an der Messrohranordnung angebracht ist;
   - eine Trägervorrichtung, aufweisend eine Aufnahmevorrichtung, und insbesondere die Sensorspule und die Erregerspule,
wobei die Messrohranordnung zumindest teilweise in eine Aufnahme der Aufnahmevorrichtung anordenbar ist und mechanisch lösbar mit der Trägervorrichtung verbindbar ist;
   - eine Betriebsschaltung,
wobei die Betriebsschaltung mit dem Schwingungserreger, insbesondere mit der Erregerspule kommuniziert,
wobei die Betriebsschaltung dazu eingerichtet ist, den Schwingungserreger, insbesondere die Erregerspule mit mindestens einem Erregersignal, insbesondere einem Erregerstrom zu betreiben;
   - eine insbesondere in der Trägervorrichtung angeordnete Messschaltung,
wobei die Messschaltung mit dem mindestens einen Schwingungssensor, insbesondere mit der Erregerspule kommuniziert,
wobei die Messschaltung dazu eingerichtet ist, am Schwingungssensor mindestens ein Schwingungssignal zu ermitteln;
   - eine Auswerteschaltung,
wobei die Auswerteschaltung mit der Messschaltung kommuniziert,
wobei die Auswerteschaltung dazu eingerichtet ist Massedurchflussmesswerte, Viskositätswerte und/oder Dichtemesswerte und/oder Werte einer davon abgeleiteten Größe zumindest anhand des Schwingungssignales oder anhand einer vom Schwingungssignal abgeleiteten Größe zu ermitteln und bereitzustellen;
umfassend die Verfahrensschritte:
   - Einführen der Messrohranordnung in die Aufnahme der Trägervorrichtung;
   - Anregen des Messrohres in Schwingungen mittels des an dem Schwingungserreger eingehenden und von der Betriebsschaltung bereitgestellten Erregersignales;
   - Ermitteln eines Messwertes einer Zustandsgröße, welche als ein Maß verwendet wird zur Überprüfung, ob ein eingeschwungener Zustand des Messrohres in der Trägervorrichtung vorliegt;
   - Überprüfen, ob ein eingeschwungener Zustand vorliegt, durch Ermitteln einer Abweichung zwischen dem ermittelten Messwert der Zustandsgröße und einem Referenzwert;
   - Ermitteln des Massedurchflussmesswertes in Abhängigkeit des werkseitig bereitgestellten Massedurchflussnullpunktes, wenn kein eingeschwungener Zustand vorliegt;
   - Ermitteln eines aktuellen Massedurchflussmesswertes und festsetzen des aktuellen Massedurchflussmesswertes als neuen Massedurchflussnullpunk, wenn ein eingeschwungener Zustand vorliegt, d.h. wenn eine Abweichung zwischen dem Messwert der Zustandsgröße und einem Referenzwert einer Referenzgröße einen oberen Grenzwert unterschreitet und einen unteren Grenzwert überschreitet;
   - Bestimmen der folgenden Massedurchflussmesswerte unter Berücksichtigung des neuen Massedurchflussnullpunktes.

Die Trägervorrichtung kann eine Fixiervorrichtung umfassen, welche dazu eingerichtet ist die Messrohranordnung in der Aufnahme zu fixieren. In dem Fall folgt auf das Einführen der Messrohranordnung, das Fixieren der Messrohranordnung an der Trägervorrichtung.

Das Erregersignal dient dazu eine Antriebsmode des mindestens einen Messrohres anzuregen. Die Antriebsmode kann neben der Biegeschwingungsgrundmode F1, Schwingungsmode F2 und/oder Schwingungsmode F3 sein. Das Erregersignal kann auch so gewählt sein, dass die Erregerfrequenz um einen Faktor oder einen Summanden von einer Eigenfrequenz der jeweiligen Schwingungsmoden abweicht.

Das Ermitteln ob beim mindestens einen Messrohr ein eingeschwungener Zustand vorliegt hat den Vorteil, dass der Abgleich zwischen dem Messwert der Zustandsgröße und dem Referenzwert der Referenzgröße nicht direkt nach Einbau durchgeführt wird, und somit durch einbaubedingte Störungen verfälscht wird. Erst nachdem die einbaubedingten Störungen abgeklungen sind, wird ein Massedurchflussmesswert ermittelt. Eine Abweichung von einem eingeschwungenen Zustand liegt zum Beispiel dann vor, wenn das mindestens eine Messrohr nicht ausreichend in der Trägervorrichtung fixiert ist, fehlerhaft angeordnet ist, Störungen eingekoppelt sind oder wenn eine Teilbefüllung vorliegt.

Der Referenzwert kann auf der Messrohranordnung hinterlegt sein. In pharmazeutische Bioprozessanwendungen sind sogenannte Manifolds bekannt, in denen Sensoren zum Überwachen von Prozessparametern und/oder Ventile in Schlauchsystemen integriert sind. Der Referenzwert kann auch im bzw. am Manifold oder in der zur Erhaltung der Sterilität des Manifolds vorgesehenen Verpackung hinterlegt sein. Alternativ kann der Referenzwert von der mit einem Leitsystem oder einer Cloud kommunizierenden Trägervorrichtung zur Verfügung gestellt werden.

Ein eingeschwungener Zustand bei einem Messrohr liegt dann vor, wenn zeitlich abhängige Störeinflüsse, die auf Grund des Einbaus der Messrohranordnung in der Trägervorrichtung erzeugt werden, vernachlässigbar gering werden. Darunter fallen nicht Störeinflüsse, die ausschließlich auf Grund der Befestigung der Messrohranordnung in der Trägervorrichtung auftreten und die im Wesentlich zeitlich unabhängig sind. Derartige Störeinflüsse können den werkseitig ermittelten Nullpunkt des Massedurchflusses verschieben. Erfindungsgemäß wird dieses Verschieben korrigiert, nachdem das Messrohr den eingeschwungenen Zustand erreicht hat. Die Korrektur erfolgt beispielsweise durch das Ersetzen des werkseitig ermittelten Nullpunktes durch einen neuen, für die vorliegende Anordnung ermittelten Nullpunkt.

Vorteilhafte Ausgestaltung der Erfindung sind Gegenstand der Unteransprüche.

Eine Ausgestaltung sieht vor, dass die Messschaltung dazu eingerichtet ist, einen auf die Erregerspule aufgeprägten Erregerstrom zu ermitteln,
wobei die Zustandsgröße der Erregerstrom oder eine zumindest von dem Erregerstrom abhängige Größe ist.

Dabei kann der Erregerstrom mittels einer Messschaltung gemessen oder wie in der WO 2007/035376 A2 gelehrten Schrift bestimmt werden, ohne diesen explizit zu messen.

Bei Coriolis-Durchflussmessgeräte nach dem Stand der Technik wird vornehmlich der Erregerstrom an der Erregerspulen oder die zumindest von dem Erregerstrom abhängige Größe überwacht. Wenn der Einbau der Messrohranordnung fehlerhaft ist oder wenn das mindestens eine Messrohr nicht ausreichend von der Umgebung entkoppelt ist, führt dies dazu, dass der Erregerstrom einen oberen Grenzwert überschreitet oder einen unteren Grenzwert unterschreitet. In dem Fall wird ein Zeitintervall abgewartet und die Überprüfung des Erregerstromes oder der von dem Erregerstrom abhängigen Größe wiederholt und/oder eine Meldung ausgegeben, dass bspw. die Messrohranordnung keinen eingeschwungenen Zustand einnehmen kann.

Eine Ausgestaltung sieht vor, dass die Zustandsgröße eine Dämpfung des Messrohres ist, insbesondere eine Lateralmodedämpfung oder eine Torsionsmodedämpfung, oder eine von der Dämpfung abhängige Größe ist.

Es ist bekannt die Dämpfung des schwingenden Messrohres zu ermitteln, um somit beispielsweise eine Dichte des zu führenden Mediums zu bestimmen. Liegt der ermittelte Messwert der Dämpfung oberhalb eines oberen Grenzwertes, so ist dies ein Indikator dafür, dass eine fehlerhafter Einbau vorliegt und das schwingende Messrohr nicht ausreichend von der Umgebung entkoppelt ist. Liegt der ermittelte Messwert der Dämpfung unterhalb eines unteren Grenzwertes, so ist dies ein Indikator dafür, dass eine außerbetriebliche Schwingungserregung auf das Messrohr aufgeprägt ist, die zum Zeitpunkt der Ermittlung noch nicht abgeklungen ist. In beiden Fällen liegt kein eingeschwungener Zustand vor.

Eine Ausgestaltung sieht vor:
- Ermitteln der Schwingung der Messrohranordnung mittels des an dem Schwingungssensor detektierten Schwingungssignals, insbesondere Spannungssignales,
wobei das ermittelte Schwingungssignal eine Schwingfrequenz *f_{M}* und insbesondere eine Schwingamplitude *A_{M}* aufweist.

Eine Ausgestaltung sieht vor, dass die Zustandsgröße die Messfrequenz *f_{M}* oder eine von der Messfrequenz *f_{M}* abhängigen Messgröße ist.

Eine stabile Schwingfrequenz ist eine wichtige Voraussetzung für eine korrekte Inbetriebnahme. Die Stabilität der Schwingfrequenz sagt nichts über Verspannungen beim Einbau aus, dafür aber über fehlerhafte Prozessbedingungen, wie Muliphasen-Zustände. Deshalb ist es vorteilhaft, wenn die Messfrequenz *f_{M}* oder eine von der Messfrequenz *f_{M}* abhängigen Messgröße für die Überprüfung, ob ein eingeschwungener Zustand des Messrohres in der Trägervorrichtung vorliegt berücksichtigt wird.

Eine Ausgestaltung sieht vor, dass die Zustandsgröße ein Dichtemesswert des vorliegenden Mediums oder eine zumindest von dem Dichtemesswert des Mediums abhängige Größe ist.

Ein Vielzahl an herkömmlichen Coriolis-Durchflussmessgeräten sind dazu ausgebildet und eingerichtet die Dichte des zu führenden Mediums zu ermitteln. Erfindungsgemäß wird zuerst die Dichte des Mediums und eine Abweichung zum Referenzwert ermittelt, bevor die Ermittlung des Massedurchflusses initiiert wird. Ist die Abweichung zum Referenzwert zu groß, so ist dies ein Indiz dafür, dass kein eingeschwungener Zustand des mindestens einen Messrohres vorliegt. Der Referenzwert kann beispielsweise der Dichtewert von Luft oder von Wasser sein.

Eine Ausgestaltung sieht vor, dass die Zustandsgröße der insbesondere dynamische Viskositätsmesswert des vorliegenden Mediums oder eine zumindest von dem Viskositätsmesswert des Mediums abhängige Größe ist.

Ein Vielzahl an herkömmlichen Coriolis-Durchflussmessgeräten sind dazu ausgebildet und eingerichtet eine Viskosität, insbesondere die dynamische Viskosität des zu führenden Mediums zu ermitteln. Erfindungsgemäß wird zuerst die dynamische Viskosität des Mediums und eine Abweichung zum Referenzwert ermittelt, bevor die Ermittlung des Massedurchflusses imitiert wird. Ist die Abweichung zum Referenzwert zu groß, so ist dies ein Indiz dafür, dass kein eingeschwungener Zustand des mindestens einen Messrohres vorliegt. Der Referenzwert kann beispielsweise der Viskositätswert von Luft oder von Wasser sein.

Eine Ausgestaltung sieht vor, dass die Zustandsgröße von einem Kehrwert der Messfrequenz *f_{M}*, insbesondere von einem Quadrat des Kehrwertes der Messfrequenz *f_{M}* abhängig ist oder von einer zumindest von dem Kehrwert der Messfrequenz *f_{M}* oder von dem Quadrat des Kehrwertes der Messfrequenz *f_{M}* abhängigen Messgröße abhängig ist.

Eine Ausgestaltung sieht vor, dass die Zustandsgröße die Messamplitude *A_{M}* oder eine von der Messamplitude *A_{M}* abhängige Größe ist.

Eine Ausgestaltung sieht vor:
- Ermitteln der Schwingung der Messrohranordnung mittels eines an einem ersten Schwingungssensor detektierten ersten Schwingungssignals,
   wobei das ermittelte erste Schwingungssignal eine erste Messfrequenz *f*_{*M*,1} und insbesondere eine erste Messamplitude *A*_{*M*,1} aufweist,
   wobei zumindest eine Komponente des ersten Schwingungserregers, insbesondere ein erster Erregermagnet an der Messrohranordnung angeordnet ist;
- Ermitteln der Schwingung der Messrohranordnung mittels eines an einem zweiten Schwingungssensor detektierten zweiten Schwingungssignals,
   wobei das ermittelte zweite Schwingungssignal eine zweite Messfrequenz *f*_{*M*,2} und insbesondere eine zweite Messamplitude *A*_{*M,*2} aufweist,
   wobei zumindest eine Komponente des zweiten Schwingungserregers, insbesondere ein zweiter Erregermagnet an dem Messrohr angeordnet ist.

Eine Ausgestaltung sieht vor, dass die Zustandsgröße das erste Schwingungssignal oder eine zumindest von dem ersten Schwingungssignal abhängige Größe ist, und/oder
wobei die Zustandsgröße das zweite Schwingungssignal oder eine zumindest von dem zweiten Schwingungssignal abhängige Größe ist.

Eine Ausgestaltung sieht vor, dass die Messrohranordnung oder die Trägervorrichtung mindestens einen Temperatursensor umfasst,
wobei die Zustandsgröße ein von dem Temperatursensor ermittelter Temperaturmesswert ist.

Temperatursensoren werden in Coriolis-Durchflussmessgeräte eingesetzt, um temperaturbedingte Einflüsse auf bspw. die Dichte zu kompensieren. Erfindungsgemäß wird anhand einer Abweichung des ermittelten Temperaturmesswertes von einem Referenzwert ermittelt, ob ein eingeschwungener Zustand des Messrohres vorliegt. Somit wird zuerst ein Temperaturmesswert des Temperatursensors bestimmt und dieser mit dem Referenzwert abgeglichen, bevor der Massedurchfluss ermittelt wird.

Eine Ausgestaltung sieht vor, dass die Messrohranordnung oder die Trägervorrichtung zwei Temperatursensoren umfasst, welche jeweils dazu eingerichtet sind eine Temperatur des mindestens einen Messrohres zu ermitteln,
wobei die Zustandsgröße eine Differenz oder eine von der Differenz der zwei ermittelten Temperaturen abhängige Größe ist.

Eine Ausgestaltung sieht vor, dass die Messrohranordnung mit einem Schlauch- und/oder Kunststoffrohrsystem fluidisch gekoppelt ist,
wobei das Schlauch- und/oder Kunststoffrohrsystem einen integrierten Sensor umfasst,
wobei der Referenzwert mittels dem Sensor bestimmt wird,
wobei der Sensor ein Viskositätssensor, ein Dichtemesser oder ein Temperatursensor ist.

Gemäß der Ausgestaltung ist der Referenzwert nicht an der Messrohranordnung hinterlegt. Stattdessen wird der Referenzwert mittels eines im Schlauch- und/oder Kunststoffrohrsystem integrierten Sensors ermittelt. Ein Abgleich zwischen dem, mit dem Sensor ermittelten Referenzwert und dem, mittels des Coriolis-Durchflussmessgerät ermittelten Messwertes gibt Aufschluss, ob ein eingeschwungener Zustand vorliegt.

Eine Ausgestaltung sieht vor, dass die Trägervorrichtung eine Ausleseeinheit aufweist, die dazu eingerichtet ist, in der Messrohranordnung hinterlegte Sensorinformationen auszulesen, insbesondere nachdem die Messrohranordnung in die Aufnahme der Trägervorrichtung eingeführt ist, umfassend den Verfahrensschritt:
- Auslesen der in der Messrohranordnung hinterlegten Sensorinformation.

Die Ausleseeinheit kann auf einem optischen, elektrischen oder elektromagnetischen Prinzip basieren. Die Sensorinformation kann in einem Datenspeicher hinterlegt sein, der über einen Kontakt oder kontaktlos ausgelesen wird, oder optisch identifizierbar ausgebildet sein.

Eine Ausgestaltung sieht vor, dass die Sensorinformation den Referenzwert der Referenzgröße umfasst.

Eine Ausgestaltung sieht vor:
- Durchführung eines Plausibilitätsabgleichs zwischen der Sensorinformation, insbesondere mit Hinzunahme einer oberen Toleranzgrenze und/oder einer unteren Toleranzgrenze und dem ermittelten Durchflussmesswert,
wobei die Sensorinformation einen zuvor mittels eines Justierverfahrens ermittelten Messwert eines Massedurchflussnullpunktes umfasst.

Ist der Plausibilitätsabgleich negativ, so wird der bereitgestellte Massedurchflussnullpunkt für die weitere Ermittlung des Massedurchflusses verwendet. Der erfindungsgemäße Abgleich kann zu einem späteren Zeitpunkt automatisch wiederholt oder durch den Benutzer initiiert werden.

Eine Ausgestaltung sieht vor:
- Festlegen des ermittelten Massedurchflussmesswertes als Massedurchflussnullpunkt.

Ist der Plausibilitätsabgleich positiv, so wird der ermittelte Massedurchflussmesswert als neuer Massedurchflussnullpunkt für die Ermittlung des Massedurchflusses verwendet. Eine einbaubedingte Abweichung des Massedurchflussnullpunktes wird somit korrigiert.

Eine Ausgestaltung sieht vor, dass das Ermitteln des Messwertes der Zustandsgröße unter der ausschließlichen Anwesenheit von Gas, insbesondere Luft oder nicht-fließendes Medium, insbesondere Wasser zu erfolgen hat.

Für eine korrekte Inbetriebnahme ist es unabdingbar, dass die Überprüfung ob ein eingeschwungener Zustand vorliegt ausschließlich bei der Anwesenheit eines Gases oder eines nicht-fließenden Mediums erfolgt. Wird für die Überprüfung ein Dichtemesswert ermittelt, so ist es vorteilhaft, wenn das Gas oder das nicht-fließende Medium bekannt sind. Das Gas kann beispielsweise Luft sein und das nicht-fließende Medium Wasser.

Eine Ausgestaltung sieht vor:
- Initiieren eines Abgleiches des Massedurchflussnullpunktes bei fließendem Medium, nur dann, wenn der aktuell ermittelte Massedurchflussmesswert kleiner als 10%, insbesondere kleiner 5% und bevorzugt kleiner 3% eines Referenzmassenflusses und wenn der aktuell ermittelte Dichtemesswert und/oder der aktuell ermittelte Viskositätswert, dem von Wasser oder Luft entspricht.

Gemäß der Ausgestaltung kann ein automatisierter Abgleich initiiert werden, unter der Bedingung, dass der aktuell ermittelte Massedurchflussmesswert kleiner als 10%, insbesondere kleiner 5% und bevorzugt kleiner 3% ist und der aktuelle Dichtemesswert und/oder Viskositätswert dem von Wasser oder Luft entspricht bzw. mit der tatsächlichen Dichte und/oder Viskosität des bekannten Mediums übereinstimmt.

Die Erfindung wird anhand der nachfolgenden Figuren näher erläutert. Es zeigt:
Fig. 1: ein für pharmazeutische Bioprozessanwendungen geeignetes Coriolis-Durchflussmessgerät;
Fig. 2: eine erste Ausgestaltung des erfindungsgemäßen Verfahrens zur Inbetriebnahme eines Coriolis-Durchflussmessgerätes in Form eines Flussdiagrammes; und
Fig. 3: eine zweite Ausgestaltung des erfindungsgemäßen Verfahrens zur Inbetriebnahme eines Coriolis-Durchflussmessgerätes in Form eines Flussdiagrammes.

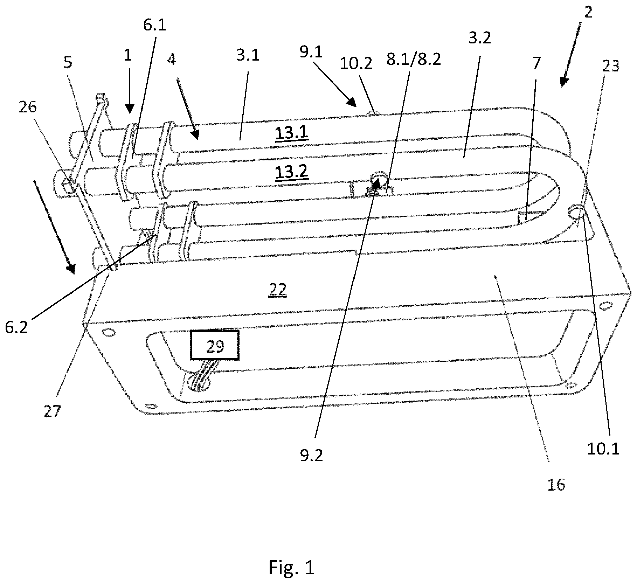

Die Fig. 1 zeigt eine Ausgestaltung der erfindungsgemäßen Messrohranordnung 4. Die Messrohranordnung 4 ist dazu geeignet in ein Messgerät auswechselbar eingesetzt zu werden. Dafür sind nur einzelne Komponenten des Schwingungserregers und der Schwingungssensoren, in dem Fall die jeweiligen Magnetanordnungen 9.1, 9.2 an der Messrohranordnung 4 angebracht. Die weiteren Komponenten sind in einer Trägervorrichtung 16, insbesondere in der Aufnahme angeordnet, welche für das Aufnehmen der Messrohranordnung 4 geeignet und ausgebildet ist. Die Messrohranordnung 4 umfasst zwei gebogenen, parallel zueinander verlaufende Messrohre 3.1, 3.2, welche über eine Koppleranordnung 1, bestehend aus vier Kopplungselementen 6, und über einen Verbindungskörper 5 miteinander verbunden sind. Zwei Kopplungselemente 6.1 sind in einem Einlauf und zwei Kopplungselemente 6.2 sind im Auslauf der jeweiligen Messrohre 3.1, 3.2 stoffschlüssig angebracht. Die Messrohre 3.1, 3.2 sind so geformt, dass die Strömungsrichtung, dargestellt durch zwei Pfeile, im Einlauf entgegengesetzt zur Strömungsrichtung in einem Auslauf orientiert ist. Im Einlauf und im Auslauf kann jeweils ein Strömungsteiler angeordnet, welcher einen Prozessanschluss aufweist zum Verbinden mit einem Schlauch- und/oder Kunststoffrohrsystem. Gemäß einer Ausgestaltung kann genau ein Strömungsteilerkörper statt zwei separate Strömungsteiler vorgesehen werden, welcher auf den Einlauf und Auslauf aufgeschoben wird und mit dazu beiträgt das Messrohranordnung 4 nach dem Einbau in die Trägervorrichtung von der Umgebung zu entkoppeln. Die einzelnen Kopplungselemente 6 sind plattenförmig ausgebildet und sind ein- oder zweiteilig. Die Kopplungselemente können die Messrohre jeweils vollständig oder nur teilweise umgreifen. Die Messrohre 3.1, 3.2 sind U-förmig ausgebildet, d.h. sie weisen jeweils zwei im Wesentlichen parallel zueinander verlaufende Schenkel auf, die über einen gebogenen Teilabschnitt verbunden sind. An jedem Messrohre 3.1, 3.2 ist eine Magnetanordnung 9.1, 9.2 angeordnet. Im gebogenen Teilabschnitt ist ein Magnet 10.1 der Magnetanordnung 9.1 angeordnet, welcher eine Komponente des Schwingungserregers bildet. In den jeweiligen Schenkeln sind jeweils ein Magnet 10.2 angebracht, welcher ein Teil des Schwingungserregers bildet. Die Magnete 10 sind an Anbringflächen angebracht. Die Anbringflächen befinden sich in der Ausgestaltung an den jeweiligen Messrohren 3.1, 3.2.

Die Messrohranordnung 4 ist teilweise in eine Aufnahme 23 einer Trägervorrichtung 16 eingeführt. Ein Pfeil deutet die Einführrichtung an. Diese verläuft in der Ausgestaltung senkrecht zu einer Längsrichtung der Aufnahme 23. Die Aufnahme kann auch derart ausgebildet sein, dass die Messrohranordnung 4 in Längsrichtung der Aufnahme einzuführen ist (nicht abgebildet). Die Trägervorrichtung 16 weist eine Mess- und/oder Betriebsschaltung 29 auf, welche mit den Schwingungserregern und Schwingungssensoren, insbesondere mit den jeweiligen Spulensystemen verbunden und dazu eingerichtet sind ein zeitlich wechselndes Magnetfeld zu erzeugen und/oder zu erfassen. Die Trägervorrichtung 16 weist einen Trägervorrichtungskörper 22 auf, in der sich die Aufnahme 23 befindet. Der Verbindungskörper 5 der Messrohranordnung 4 weist Montageflächen 26 auf, welche dazu dienen die Messrohranordnung 4 in eine vorgegebene Position in der Trägervorrichtung 16 anzuordnen. Gemäß der abgebildeten Ausgestaltung zeigt das Lot der Montagefläche 26 senkrecht zur Längsrichtung der Messrohranordnung 4. Gemäß einer weiteren vorteilhaften Ausgestaltung zeigt das Lot der Montagefläche 26 in Richtung der Längsrichtung der Messrohranordnung 4. Die mit der Montagefläche 26 des Verbindungskörpers 5 in Kontakt stehende Fläche des Trägervorrichtungskörpers 22 ist die Auflagefläche 27.

Die Trägervorrichtung 16 weist zwei parallel zueinander orientierte Seitenflächen auf, welche die Aufnahme 23 quer zur Längsrichtung der Aufnahme begrenzen. In den Seitenflächen sind die Spulenvorrichtungen der Schwingungssensoren 8.1, 8.2 und die Spulenvorrichtung des Schwingungserregers 7 angeordnet. Die Spulenvorrichtungen der Schwingungssensoren 8.1, 8.2 sind in Längsrichtung der Aufnahme zur Spulenvorrichtung des Schwingungserregers 7 angeordnet. Alle drei Spulenvorrichtungen befinden sich in einer Spulenebene. Des Weiteren sind die drei Spulenvorrichtungen als Plattenspule ausgebildet und in die Seitenfläche versenkt. An der Seitenfläche sind drei Spulenvorrichtungen im Wesentlich gegenüber von den drei Spulenvorrichtungen angeordnet. In den beiden Seitenflächen ist jeweils eine Führung eingearbeitet, welche sich senkrecht zur Längsrichtung der Aufnahme 23 und parallel zur Spulenebene erstreckt. Gemäß der abgebildeten Ausgestaltung erstreckt sich die Aufnahme über zwei Stirnseiten der Aufnahme 23. Dies ermöglicht ein Einführen der Messrohranordnung 4 senkrecht zur Längsrichtung der Messrohranordnung 4. Gemäß einer weiteren Ausgestaltung erstreckt sich die Aufnahme ausschließlich über eine Stirnseite. In dem Fall ist die Messrohranordnung 4 in Längsrichtung der Messrohranordnung 4 - oder der Trägervorrichtung 16 - in die Trägervorrichtung 16 einzuführen.

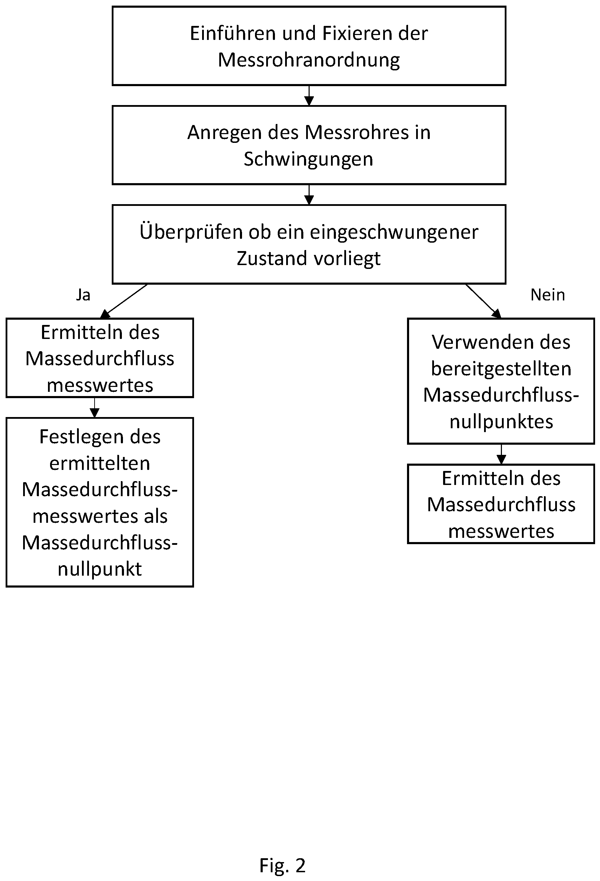

Die Fig. 2 zeigt eine erste Ausgestaltung des erfindungsgemäßen Verfahrens zur Inbetriebnahme eines Coriolis-Durchflussmessgerätes in Form eines Flussdiagrammes. In einem erste Verfahrensschritt wird der das Einwegartikel ausgebildete Teil des Coriolis-Durchflussmessgerätes - die Messrohranordnung - in die Aufnahme der Trägervorrichtung eingeführt und fixiert. Die Messrohranordnung umfasst mindestens ein Messrohr. Um zu ermitteln ob bei dem mindestens einem Messrohr eine eingeschwungener Zustand vorliegt, wird das Messrohr in Schwingungen angeregt. Dafür wird ein Erregersignal an den Schwingungserreger angelegt. Der Schwingungserreger erzeugt ein zeitlich veränderliches Magnetfeld, welches mit dem durch den am Messrohr angebrachten Erregermagneten erzeugte Magnetfeld wechselwirkt und somit eine Kraft auf das mindestens eine Messrohr ausübt. Diese Kraft bewirkt ein Schwingen des mindestens einen Messrohres. Nach dem Anregen des Messrohres wird ein Messwert einer Zustandsgröße ermittelt, die als ein Maß zur Überprüfung dient, ob ein eingeschwungener Zustand des Messrohres in der Trägervorrichtung vorliegt. Die Zustandsgröße kann ein Erregerstrom sein, der durch die Erregerspule fließt um das zeitlich veränderliche Magnetfeld zu erzeugen oder eine von dem Erregerstrom abhängige Größe. Alternativ kann die Zustandsgröße die Dämpfung des Messrohres sein, die sich auf das Schwingen auswirkt oder eine von der Dämpfung abhängigen Größe. Gemäß einer vorteilhaften Ausgestaltung ist die Zustandsgröße ein Dichtemesswert des vorliegenden Mediums oder eine von dem Dichtemesswert abhängige Größe. Die Zustandsgröße kann auch eine dynamische Viskosität oder eine von der dynamischen Viskosität des im Messrohr vorliegenden Mediums abhängige Größe sein. Alternativ kann die Zustandsgröße eine Messfrequenz *f_{M}*, eine Messamplitude *A_{M}* oder ein Kehrwert bzw. ein Quadrat des Kehrwertes der Messfrequenz *f_{M}* des ermittelten Schwingungssignales sein. Weist das Coriolis-Durchflussmessgerät zwei Schwingungssensoren auf, so können die zwei jeweils an den beiden Schwingungssensoren ermittelten Schwingungssignale, insbesondere die jeweiligen Messfrequenzen und Messamplituden für die Ermittlung des Vorliegens eine eingeschwungenen Zustands berücksichtigt werden. Umfasst das Coriolis-Durchflussmessgerät zwei Messrohre, welche jeweils mit zwei Schwingungssensoren gekoppelt sind, so umfasst gehen die vier Schwingungssignale mit den jeweiligen Messfrequenzen und/oder Messamplituden in die Überprüfung ein.

Im nächsten Schritt wird überprüft ob ein eingeschwungener Zustand vorliegt. Dafür wird eine Abweichung zwischen dem ermittelten Messwert der Zustandsgröße und einem Referenzwert ermittelt. Der Referenzwert kann von einem weiteren Sensor ermittelt und zur Verfügung gestellt oder werkseitig bereitgestellt sein. So kann der Sensor in einem Schlauch- und/oder Kunststoffrohrsystem integriert sein, mit dem auch die Messrohranordnung fluidisch gekoppelt ist. Der Referenzwert kann ein maximaler bzw. minimaler Erregerstrom, die Dichte von Wasser oder Luft, die Viskosität von Wasser oder Luft, eine Referenzfrequenz, eine Referenzamplitude, eine minimale bzw. maximale Dämpfung und/oder eine davon abhängige Größe sein.

Liegt auch nach einem definierten Zeitintervall kein eingeschwungener Zustand vor, so nimmt das Coriolis-Durchflussmessgerät seinen Betrieb auf und der Massedurchfluss wird in Abhängigkeit des werkseitig bereitgestellten Massedurchflussnullpunktes ermittelt. Alternativ kann die Betriebsschaltung dazu eingerichtet sein, einen automatischen Abgleich durchzuführen, wenn zu einem späteren Zeitpunkt ein eingeschwungener Zustand vorliegt.

Liegt ein eingeschwungener Zustand vor, so wird ein aktueller Massedurchflussmesswert ermittelt und dieser als neuer Massedurchflussnullpunkt festgesetzt. Die folgenden Massedurchflussmesswerte werden unter Berücksichtigung des neuen Massedurchflussnullpunkt bestimmt.

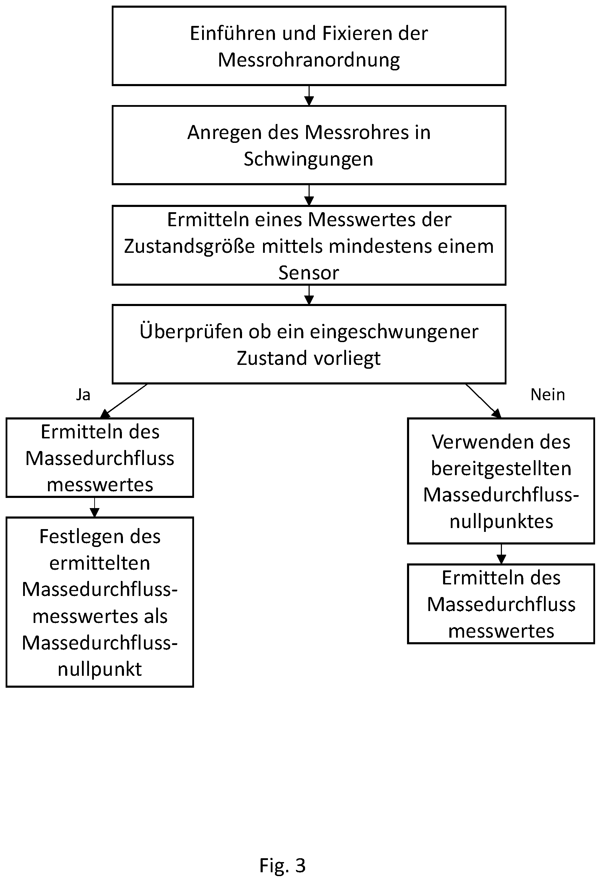

Die Fig. 3 zeigt eine zweite Ausgestaltung des erfindungsgemäßen Verfahrens zur Inbetriebnahme eines Coriolis-Durchflussmessgerätes in Form eines Flussdiagrammes. Die zweite Ausgestaltung unterscheidet sich von der ersten Ausgestaltung darin, dass die Ermittlung des Messwertes der Zustandsgröße nicht mit den Schwingungssensor bzw. Schwingungssensoren erfolgt, sondern mittels weiteren Sensoren, die nicht auf dem Coriolis-Prinzip basieren. Dies kann beispielsweise ein Temperatursensor sein, der am Messrohr angeordnet ist. Vorteilhafter wäre die Berücksichtigung von Messwerten - z.B. absolute Temperatur oder Temperaturdifferenz - mindestens zweier an der Messrohranordnung angebrachter Temperatursensoren.

### Bezugszeichenliste

Koppleranordnung 1
Coriolis-Durchflussmessgerät 2
Messrohr 3
Messrohranordnung 4
Verbindungskörper 5
Kopplungselement 6
Schwingungserreger 7
Schwingungssensor 8
Magnetanordnung 9
Magnet 10
Messrohrkörper 13
Trägervorrichtung 16
Trägervorrichtungskörper 22
Aufnahme 23
Montagefläche 26
Auflagefläche 27
Mess- und/oder Betriebsschaltung 29

## Patentansprüche

1. Verfahren zur Inbetriebnahme eines Coriolis-Durchflussmessgerätes, insbesondere eines Coriolis-Durchflussmessgerätes für bevorzugt pharmazeutische Bioprozessanwendungen,
wobei das Coriolis-Durchflussmessgerät umfasst:
- eine Messrohranordnung (4),
wobei die Messrohranordnung mindestens ein, von einem Medium durchströmbares Messrohr umfasst;
- mindestens einen Schwingungserreger, welcher dazu eingerichtet ist, die Messrohranordnung (4), insbesondere das Messrohr zu Schwingungen anzuregen, insbesondere umfassend einen Erregermagneten und eine Erregerspule;
wobei zumindest eine Komponente des Schwingungserregers, insbesondere der Erregermagnet am Messrohr angeordnet ist;
- mindestens einen Schwingungssensor, welcher dazu eingerichtet ist, die Schwingungen des mindestens einen Messrohres zu erfassen, insbesondere umfassend einen Sensormagneten und eine Sensorspule,
wobei zumindest eine Komponente des Schwingungssensors, insbesondere der Sensormagnet an der Messrohranordnung angebracht ist;
- eine Trägervorrichtung (16), aufweisend eine Aufnahmevorrichtung, und insbesondere die Sensorspule und die Erregerspule,
wobei die Messrohranordnung (4) zumindest teilweise in eine Aufnahme (23) der Aufnahmevorrichtung (16) anordenbar ist und mechanisch lösbar mit der Trägervorrichtung (16) verbindbar ist;
- eine Betriebsschaltung,
wobei die Betriebsschaltung mit dem Schwingungserreger, insbesondere mit der Erregerspule kommuniziert,
wobei die Betriebsschaltung dazu eingerichtet ist, den Schwingungserreger (7), insbesondere die Erregerspule mit mindestens einem Erregersignal, insbesondere einem Erregerstrom zu betreiben;
- eine insbesondere in der Trägervorrichtung angeordnete Messschaltung,
wobei die Messschaltung mit dem mindestens einen Schwingungssensor, insbesondere mit der Erregerspule kommuniziert,
wobei die Messschaltung (29) dazu eingerichtet ist, am Schwingungssensor mindestens ein Schwingungssignal zu ermitteln;
- eine Auswerteschaltung,
wobei die Auswerteschaltung mit der Messschaltung kommuniziert,
wobei die Auswerteschaltung dazu eingerichtet ist Massedurchflussmesswerte, Viskositätswerte und/oder Dichtemesswerte und/oder Werte einer davon abgeleiteten Größe zumindest anhand des Schwingungssignales oder anhand einer vom Schwingungssignal abgeleiteten Größe zu ermitteln und bereitzustellen;
umfassend die Verfahrensschritte:
- Einführen der Messrohranordnung in die Aufnahme der Trägervorrichtung;
- Anregen des Messrohres in Schwingungen mittels des an dem Schwingungserreger eingehenden und von der Betriebsschaltung bereitgestellten Erregersignales;
**gekennzeichnet durch** folgende Verfahrensschritte:
- Ermitteln eines Messwertes einer Zustandsgröße, welche als ein Maß verwendet wird zur Überprüfung, ob ein eingeschwungener Zustand des Messrohres in der Trägervorrichtung vorliegt;
- Überprüfen, ob ein eingeschwungener Zustand vorliegt, durch Ermitteln einer Abweichung zwischen dem ermittelten Messwert der Zustandsgröße und einem Referenzwert;
- Ermitteln des Massedurchflussmesswertes in Abhängigkeit des werkseitig bereitgestellten Massedurchflussnullpunktes, wenn kein eingeschwungener Zustand vorliegt;
- Ermitteln eines aktuellen Massedurchflussmesswertes und festsetzen des aktuellen Massedurchflussmesswertes als neuen Massedurchflussnullpunk, wenn ein eingeschwungener Zustand vorliegt, d.h. wenn eine Abweichung zwischen dem Messwert der Zustandsgröße und einem Referenzwert einer Referenzgröße einen oberen Grenzwert unterschreitet und einen unteren Grenzwert überschreitet;
- Bestimmen der folgenden Massedurchflussmesswerte unter Berücksichtigung des neuen Massedurchflussnullpunktes.

2. Verfahren nach Anspruch 1,
wobei die Messschaltung dazu eingerichtet ist, einen auf die Erregerspule aufgeprägten Erregerstrom zu ermitteln,
wobei die Zustandsgröße der Erregerstrom oder eine zumindest von dem Erregerstrom abhängige Größe ist.

3. Verfahren nach Anspruch 1 und/oder 2,
wobei die Zustandsgröße eine Dämpfung des Messrohres ist, insbesondere eine Lateralmodedämpfung oder eine Torsionsmodedämpfung, oder eine von der Dämpfung abhängige Größe ist.

4. Verfahren nach Anspruch 1, umfassend den Verfahrensschritt:
- Ermitteln der Schwingung der Messrohranordnung mittels des an dem Schwingungssensor detektierten Schwingungssignals, insbesondere Spannungssignales,
wobei das ermittelte Schwingungssignal eine Schwingfrequenz *f_{M}* und insbesondere eine Schwingamplitude *A_{M}* aufweist.

5. Verfahren nach Anspruch 4,
wobei die Zustandsgröße die Messfrequenz *f_{M}* oder eine von der Messfrequenz *f_{M}* abhängigen Messgröße ist.

6. Verfahren nach mindestens einem der Ansprüche 1 bis 3,
wobei die Zustandsgröße ein Dichtemesswert des vorliegenden Mediums oder eine zumindest von dem Dichtemesswert des Mediums abhängige Größe ist.

7. Verfahren nach Anspruch 5 und/oder 6,
wobei die Zustandsgröße der insbesondere dynamische Viskositätsmesswert des vorliegenden Mediums oder eine zumindest von dem Viskositätsmesswert des Mediums abhängige Größe ist.

8. Verfahren nach Anspruch 1 und/oder 5,
wobei die Zustandsgröße von einem Kehrwert der Messfrequenz *f_{M}*, insbesondere von einem Quadrat des Kehrwertes der Messfrequenz *f_{M}* abhängig ist oder von einer zumindest von dem Kehrwert der Messfrequenz *f_{M}* oder von dem Quadrat des Kehrwertes der Messfrequenz *f_{M}* abhängigen Messgröße abhängig ist.

9. Verfahren nach Anspruch 1 und/oder 5,
wobei die Zustandsgröße die Messamplitude *A_{M}* oder eine von der Messamplitude *A_{M}* abhängige Größe ist.

10. Verfahren nach Anspruch 1, umfassend den Verfahrensschritt:
- Ermitteln der Schwingung der Messrohranordnung mittels eines an einem ersten Schwingungssensor detektierten ersten Schwingungssignals,
wobei das ermittelte erste Schwingungssignal eine erste Messfrequenz *f*_{*M*,1} und insbesondere eine erste Messamplitude *A*_{*M*,1} aufweist,
wobei zumindest eine Komponente des ersten Schwingungserregers, insbesondere ein erster Erregermagnet an der Messrohranordnung angeordnet ist;
- Ermitteln der Schwingung der Messrohranordnung mittels eines an einem zweiten Schwingungssensor detektierten zweiten Schwingungssignals,
wobei das ermittelte zweite Schwingungssignal eine zweite Messfrequenz *f*_{*M*,2} und insbesondere eine zweite Messamplitude *A*_{*M*,2} aufweist,
wobei zumindest eine Komponente des zweiten Schwingungserregers, insbesondere ein zweiter Erregermagnet an dem Messrohr angeordnet ist.

11. Verfahren nach Anspruch 10,
wobei die Zustandsgröße das erste Schwingungssignal oder eine zumindest von dem ersten Schwingungssignal abhängige Größe ist, und/oder
wobei die Zustandsgröße das zweite Schwingungssignal oder eine zumindest von dem zweiten Schwingungssignal abhängige Größe ist.

12. Verfahren nach Anspruch 10,
wobei die Messrohranordnung oder die Trägervorrichtung mindestens einen Temperatursensor umfasst,
wobei die Zustandsgröße ein von dem Temperatursensor ermittelter Temperaturmesswert ist.

13. Verfahren nach Anspruch 10,
wobei die Messrohranordnung oder die Trägervorrichtung zwei Temperatursensoren umfasst, welche jeweils dazu eingerichtet sind, eine Temperatur des mindestens einen Messrohres zu ermitteln,
wobei die Zustandsgröße eine Differenz der zwei ermittelten Temperaturen ist.

14. Verfahren nach mindestens einem der vorhergehenden Ansprüche,
wobei die Messrohranordnung mit einem Schlauch- und/oder Kunststoffrohrsystem fluidisch gekoppelt ist,
wobei das Schlauch- und/oder Kunststoffrohrsystem einen integrierten Sensor umfasst,
wobei der Referenzwert mittels dem Sensor bestimmt wird,
wobei der Sensor ein Viskositätssensor, ein Dichtemesser oder ein Temperatursensor ist.

15. Verfahren nach mindestens einem der vorhergehenden Ansprüche,
wobei die Trägervorrichtung eine Ausleseeinheit aufweist, die dazu eingerichtet ist, in der Messrohranordnung hinterlegte Sensorinformationen auszulesen, insbesondere nachdem die Messrohranordnung in die Aufnahme der Trägervorrichtung eingeführt ist, umfassend den Verfahrensschritt:
- Auslesen der in der Messrohranordnung hinterlegten Sensorinformation.

16. Verfahren nach Anspruch 14,
wobei die Sensorinformation den Referenzwert der Referenzgröße umfasst.

17. Verfahren nach Anspruch 14, umfassend den Verfahrensschritt:
- Durchführung eines Plausibilitätsabgleichs zwischen der Sensorinformation, insbesondere mit Hinzunahme einer oberen Toleranzgrenze und/oder einer unteren Toleranzgrenze und dem ermittelten Durchflussmesswert,
wobei die Sensorinformation einen zuvor mittels eines Justierverfahrens ermittelten Messwert eines Massedurchflussnullpunktes umfasst.

18. Verfahren nach mindestens einem der vorhergehenden Ansprüche, umfassen die Verfahrensschritte:
- Festlegen des ermittelten Massedurchflussmesswertes als Massedurchflussnullpunkt.

19. Verfahren nach mindestens einem der vorhergehenden Ansprüche,
wobei das Ermitteln des Messwertes der Zustandsgröße unter der ausschließlichen Anwesenheit von Gas, insbesondere Luft oder nicht-fließendes Medium, insbesondere Wasser zu erfolgen hat.

20. Verfahren nach mindestens einem der vorhergehenden Ansprüche, umfassend den Verfahrensschritt:
- Initiieren eines Abgleiches des Massedurchflussnullpunktes bei fließendem Medium, nur dann, wenn der aktuell ermittelte Massedurchflussmesswert kleiner als 10%, insbesondere kleiner 5% und bevorzugt kleiner 3% eines Referenzmassenflusses und wenn der aktuell ermittelte Dichtemesswert und/oder der aktuell ermittelte Viskositätswert, dem von Wasser oder Luft entspricht.

## Claims

1. Method for starting up a Coriolis flowmeter, in particular a Coriolis flowmeter for preferred pharmaceutical bioprocess applications,
wherein the Coriolis flowmeter comprises:
- a measuring tube arrangement (4),
wherein the measuring tube arrangement comprises at least one measuring tube through which a medium can flow;
- at least one vibration exciter, which is configured to cause the measuring tube arrangement (4), in particular the measuring tube, to vibrate, in particular comprising an excitation magnet and an excitation coil;
wherein at least one component of the vibration exciter, in particular the excitation magnet, is arranged on the measuring tube;
- at least one vibration sensor, which is configured to capture the vibrations of at least one measuring tube, in particular comprising a sensor magnet and a sensor coil,
wherein at least one component of the vibration sensor, in particular the sensor magnet, is attached to the measuring tube arrangement;
- a carrier (16), comprising a mounting fixture and, in particular, the sensor coil and excitation coil,
wherein the measuring tube arrangement (4) can be at least partially arranged in a mount (23) of the mounting fixture (16) and can be connected to and mechanically released from the carrier (16);
- an operating circuit,
wherein the operating circuit communicates with the vibration exciter, in particular with the excitation coil,
wherein the operating circuit is configured to operate the vibration exciter (7), in particular the excitation coil, with at least one excitation signal, in particular an exciter current;
- a measuring circuit arranged in particular in the carrier,
wherein the measuring circuit communicates with the at least one vibration sensor, in particular with the excitation coil,
wherein the measuring circuit (29) is configured to determine at least one vibration signal at the vibration sensor;
- an evaluation circuit,
wherein the evaluation circuit communicates with the measuring circuit,
wherein the evaluation circuit is configured to determine and provide the mass flow measured values, viscosity values and/or density measured values and/or values of a derived variable at least based on the vibration signal or based on a variable derived from the vibration signal;
comprising these process steps:
Insertion of the measuring tube arrangement in the carrier mount;
Causing the measuring tube to vibrate by means of the exciter signal provided by the operating circuit and incoming at the vibration exciter; identified by the following process steps:
- Determination of a measured value of a status variable, which is used as a measure to check whether there is a steady state of the measuring tube in the carrier;
- Checking whether there is a steady state by determining a non-conformity between the determined measured value of the status variable and a reference value;
- Determining the mass flow measured value depending on the mass flow zero point provided at the factory, if there is no steady state;
- Determining a current mass flow measured value and setting the current mass flow measured value as the new mass flow zero point if there is a steady state, i.e. if a non-conformity between the measured value of the status variable and a reference value of a reference variable falls below an upper limit value and exceeds a lower limit value;
- Determining the following mass flow measured values taking into account the new mass flow zero point.

2. Procedure as claimed in Claim 1,
wherein the measuring circuit is configured to determine an exciter current superimposed on the excitation coil,
wherein the status variable is the exciter current or a variable at least dependent on the exciter current.

3. Procedure as claimed in Claim 1 and/or 2,
wherein the status variable is a damping of the measuring tube, in particular lateral mode damping or torsion mode damping, or a variable dependent on the damping.

4. Procedure as claimed in Claim 1, comprising the process step:
Determining the vibration of the measuring tube arrangement by means of the vibration signal captured at the vibration sensor, in particular the voltage signal,
wherein the determined vibration signal has an oscillation frequency *f_{M}* and in particular an oscillation amplitude *A_{M}.*

5. Procedure as claimed in Claim 4,
wherein the status variable is the measuring frequency *f_{M}* or a measured variable dependent on the measuring frequency *f_{M}*.

6. Procedure as claimed in at least one of Claims 1 to 3,
wherein the status variable is a density measured value of the present medium or is a variable dependent at least on the density measured value of the medium.

7. Procedure as claimed in Claim 5 and/or 6,
wherein the status variable is the in particular dynamic viscosity measured value of the present medium or a variable dependent at least on the viscosity measured value of the medium.

8. Procedure as claimed in Claim 1 and/or 5,
wherein the status variable is dependent on a reciprocal value of the measuring frequency *f_{M}*, in particular on a square of the reciprocal value of the measuring frequency *f_{M}* or is dependent on a measured variable that is dependent at least on the reciprocal value of the measuring frequency *f_{M}* or on the square of the reciprocal value of the measuring frequency *f_{M}*.

9. Procedure as claimed in Claim 1 and/or 5,
wherein the status variable is the measuring amplitude *A_{M}* or a variable dependent on the measuring amplitude *A_{M}*.

10. Procedure as claimed in Claim 1, comprising the process step:
Determining the vibration of the measuring tube arrangement by means of an initial vibration signal detected at an initial vibration sensor,
wherein the determined initial vibration signal comprises an initial measuring frequency *f*_{*M*,}*₁* in particular an initial measuring amplitude *A_{M,1}*,
wherein at least one component of the first vibration exciter, in particular an initial exciter magnet, is arranged in the measuring tube arrangement;
- Determining the vibration of the measuring tube arrangement by means of a second vibration signal detected at a second vibration sensor,
wherein the determined second vibration signal comprises a second measuring frequency *f_{M,2}* in particular a second measuring amplitude *A_{M,2}*,
wherein at least one component of the second vibration exciter, in particular a second exciter magnet, is arranged in the measuring tube arrangement;.

11. Procedure as claimed in Claim 10,
wherein the status variable is the first vibration signal or a variable dependent at least on the first vibration signal, and/or
wherein the status variable is the second vibration signal or a variable dependent at least on the second vibration signal.

12. Procedure as claimed in Claim 10,
wherein the measuring tube arrangement or carrier comprises at least one temperature sensor,
wherein the status variable is a temperature measured value determined by the temperature sensor.

13. Procedure as claimed in Claim 10,
wherein the measuring tube arrangement or carrier comprises two temperature sensors, which are each configured to determine a temperature of the at least one measuring tube,
wherein the status variable is a difference between the two determined temperatures.

14. Procedure as claimed in at least one of the preceding claims, wherein the measuring tube arrangement has a fluid coupling with a hose and/or plastic tube system,
wherein the hose and/or plastic tube system comprises an integrated sensor,
wherein the reference value is determined by a sensor,
wherein the sensor is a viscosity sensor, a density meter or a temperature sensor.

15. Procedure as claimed in at least one of the preceding claims,
wherein the carrier has an upload unit configured to upload sensor information saved in the measuring tube arrangement, in particular after the measuring tube arrangement is inserted in the carrier mounting, comprising the process step:
- Upload of the sensor information saved in the measuring tube arrangement.

16. Procedure as claimed in Claim 14,
wherein the sensor information comprises the reference value of the reference variable.

17. Procedure as claimed in Claim 14, comprising the process step:
Performance of a plausibility comparison between the sensor information, in particular with the addition of an upper tolerance limit and/or a lower tolerance limit and the determined flow measured value,
wherein the sensor information comprises a measured value of a mass flow zero point previously determined by means of an adjustment procedure.

18. Procedure as claimed in at least one of the preceding claims, comprising the process steps:
- Definition of the determined mass flow measured value as the mass flow zero point.

19. Procedure as claimed in at least one of the preceding claims,
wherein the measured value of the status variable must be determined under the exclusive presence of gas, in particular air, or a non-fluid medium, in particular water.

20. Procedure as claimed in at least one of the preceding claims, comprising the process step:
- Initiation of a comparison of the mass flow zero point with fluid medium, only if the currently determined mass flow measured value is less than 10%, in particular less than 5% and preferably less than 3% of a reference mass flow and if the currently determined density measured value and/or currently determined viscosity value corresponds to that of water or air.

## Revendications

1. Procédé destiné à la mise en service d'un débitmètre Coriolis, notamment un débitmètre Coriolis, de préférence, pour des applications de bioprocessus pharmaceutiques,
le débitmètre Coriolis comprenant :
- un arrangement de tubes de mesure (4),
l'arrangement de tubes de mesure comprenant au moins un tube de mesure pouvant être traversé par un produit ;
- au moins un excitateur de vibrations, lequel est conçu pour faire vibrer l'arrangement de tubes de mesure (4), notamment le tube de mesure, lequel excitateur comprend notamment un aimant d'excitation et une bobine d'excitation
au moins un composant de l'excitateur de vibrations, notamment l'aimant d'excitation, étant disposé sur le tube de mesure ;
- au moins un capteur de vibrations, lequel est conçu pour mesurer les vibrations de l'au moins un tube de mesure, lequel capteur comprend notamment un aimant de capteur et une bobine de capteur,
au moins un composant du capteur de vibrations, notamment l'aimant de capteur, étant monté sur l'arrangement de tubes de mesure ;
- un dispositif support (16), lequel comprend un dispositif de réception, et notamment la bobine de capteur et la bobine d'excitation,
l'arrangement de tubes de mesure (4) pouvant être disposé au moins partiellement dans un logement (23) du dispositif de réception (16) et pouvant être relié mécaniquement de manière amovible au dispositif support (16) ;
- un circuit de fonctionnement,
le circuit de fonctionnement communiquant avec l'excitateur de vibrations, notamment avec la bobine d'excitation,
le circuit de fonctionnement étant conçu pour faire fonctionner l'excitateur de vibrations (7), notamment la bobine d'excitation, avec au moins un signal d'excitation, notamment un courant d'excitation ;
- un circuit de mesure disposé notamment dans le dispositif support,
le circuit de mesure communiquant avec l'au moins un capteur de vibrations, notamment avec la bobine d'excitation,
le circuit de mesure (29) étant conçu pour déterminer au moins un signal de vibrations au niveau du capteur de vibrations ;
- un circuit d'évaluation,
le circuit d'évaluation communiquant avec le circuit de mesure,
le circuit d'évaluation étant conçu pour déterminer et mettre à disposition des valeurs mesurées de débit massique, des valeurs de viscosité et/ou des valeurs mesurées de densité et/ou des valeurs d'une grandeur qui en est dérivée, au moins à l'aide du signal de vibration ou à l'aide d'une grandeur dérivée du signal de vibration ;
lequel procédé comprend les étapes suivantes :
- Introduction de l'arrangement de tubes de mesure dans le logement du dispositif support ;
- Excitation du tube de mesure en vibrations au moyen du signal d'excitation entrant sur l'excitateur de vibrations et fourni par le circuit de fonctionnement ;
lequel procédé est **caractérisé par** les étapes suivantes :
- Détermination d'une valeur mesurée d'une grandeur d'état, laquelle est utilisée comme mesure pour vérifier si le tube de mesure se trouve dans un état de résonance dans le dispositif support ;
- Vérification si un état de stabilisation existe en déterminant un écart entre la valeur mesurée déterminée de la grandeur d'état et une valeur de référence ;
- Détermination de la valeur mesurée de débit massique en fonction du point zéro du débit massique fourni au départ usine, s'il n'y a pas d'état de stabilisation ;
- Détermination d'une valeur mesurée de débit massique actuelle et fixation de la valeur mesurée de débit massique actuelle comme nouveau point zéro de débit massique lorsqu'un état de stabilisation est présent, c'est-à-dire lorsqu'un écart entre la valeur mesurée de la grandeur d'état et une valeur de référence d'une grandeur de référence est inférieur à une valeur limite supérieure et supérieur à une valeur limite inférieure ;
- Détermination des valeurs mesurées de débit massique suivantes en tenant compte du nouveau point zéro de débit massique.

2. Procédé selon la revendication 1,
pour lequel le circuit de mesure est conçu pour déterminer un courant d'excitation appliqué à la bobine d'excitation,
la grandeur d'état étant le courant d'excitation ou une grandeur dépendant au moins du courant d'excitation.

3. Procédé selon la revendication 1 et/ou 2,
pour lequel la grandeur d'état est un amortissement du tube de mesure, notamment un amortissement en mode latéral ou un amortissement en mode de torsion, ou une grandeur dépendant de l'amortissement.

4. Procédé selon la revendication 1, lequel procédé comprend l'étape suivante :
- Détermination de la vibration de l'arrangement de tubes de mesure au moyen du signal de vibration, notamment du signal de tension, détecté au niveau du capteur de vibration,
le signal de vibration déterminé présentant une fréquence de vibration *f_{M}* et notamment une amplitude de vibration *A_{M}.*

5. Procédé selon la revendication 4,
pour lequel la grandeur d'état est la fréquence de mesure *f_{M}* ou une grandeur de mesure dépendant de la fréquence de mesure *f_{M}*.

6. Procédé selon au moins l'une des revendications 1 à 3,
pour lequel la grandeur d'état est une valeur mesurée de la densité du produit présent ou une grandeur dépendant au moins de la valeur mesurée de la densité du produit.

7. Procédé selon la revendication 5 et/ou 6,
pour lequel la grandeur d'état est la valeur mesurée de la viscosité, notamment dynamique, du produit présent ou une grandeur dépendant au moins de la valeur mesurée de la viscosité du produit.

8. Procédé selon la revendication 1 et/ou 5,
pour lequel la grandeur d'état dépendant d'une valeur inverse de la fréquence de mesure *f_{M}*, notamment d'un carré de la valeur inverse de la fréquence de mesure *f_{M}*, ou dépendant d'une grandeur de mesure dépendant au moins de la valeur inverse de la fréquence de mesure *f_{M}* ou du carré de la valeur inverse de la fréquence de mesure *f_{M}*.

9. Procédé selon la revendication 1 et/ou 5,
pour lequel la grandeur d'état est l'amplitude de mesure *A_{M}* ou une grandeur dépendant de l'amplitude de mesure *A_{M}.*

10. Procédé selon la revendication 1, comprenant les étapes de procédé suivantes :
- Détermination de la vibration de l'arrangement de tubes de mesure au moyen d'un premier signal de vibration détecté sur un premier capteur de vibrations,
le premier signal de vibration déterminé présentant une première fréquence de mesure *f_{M,1}* et notamment une première amplitude de mesure *A_{M,1}*,
au moins un composant du premier excitateur de vibrations, notamment un premier aimant d'excitation, étant disposé sur l'arrangement de tubes de mesure ;
- Détermination de la vibration de l'arrangement de tubes de mesure au moyen d'un deuxième signal de vibration détecté sur un deuxième capteur de vibrations,
le deuxième signal de vibration déterminé présentant une deuxième fréquence de mesure *f*_{*M*,2} et notamment une deuxième amplitude de mesure *A*_{*M*,2},
au moins un composant du deuxième excitateur de vibrations, notamment un deuxième aimant d'excitation, étant disposé sur le tube de mesure.

11. Procédé selon la revendication 10,
pour lequel la grandeur d'état est le premier signal de vibration ou une grandeur dépendant au moins du premier signal de vibration, et/ou
pour lequel la grandeur d'état est le deuxième signal de vibration ou une grandeur dépendant au moins du deuxième signal de vibration.

12. Procédé selon la revendication 10,
pour lequel l'arrangement de tubes de mesure ou le dispositif support comprend au moins un capteur de température,
la grandeur d'état étant une valeur mesurée de température déterminée par le capteur de température.

13. Procédé selon la revendication 10,
pour lequel l'arrangement de tubes de mesure ou le dispositif support comprend deux capteurs de température, lesquels sont chacun conçus pour déterminer une température de l'au moins un tube de mesure,
la grandeur d'état étant une différence entre les deux températures déterminées.

14. Procédé selon au moins l'une des revendications précédentes,
pour lequel l'arrangement de tubes de mesure est couplé fluidiquement à un système de tuyaux flexibles et/ou de tubes en plastique,
pour lequel le système de tuyaux flexibles et/ou de tubes en plastique comprend un capteur intégré,
la valeur de référence étant déterminée au moyen du capteur,
le capteur étant un capteur de viscosité, un densimètre ou un capteur de température.

15. Procédé selon au moins l'une des revendications précédentes,
pour lequel le dispositif support comporte une unité de lecture, laquelle est conçue pour lire des informations de capteur stockées dans l'arrangement de tubes de mesure, notamment après que l'arrangement de tubes de mesure a été introduit dans le logement du dispositif support, lequel procédé comprend l'étape suivante :
- Lecture des informations de capteur stockées dans l'arrangement de tubes de mesure.

16. Procédé selon la revendication 14,
pour lequel l'information de capteur comprend la valeur de référence de la grandeur de référence.

17. Procédé selon la revendication 14, lequel procédé comprend l'étape suivante :
- Réalisation d'un contrôle de plausibilité entre l'information de capteur, notamment avec l'ajout d'une limite de tolérance supérieure et/ou d'une limite de tolérance inférieure, et la valeur mesurée de débit déterminée,
l'information de capteur comprenant une valeur mesurée d'un point zéro de débit massique déterminée au préalable au moyen d'un procédé d'ajustage.

18. Procédé selon au moins l'une des revendications précédentes, lequel procédé comprend l'étape suivante :
- Définition de la valeur mesurée de débit massique déterminée comme point zéro du débit massique.

19. Procédé selon au moins l'une des revendications précédentes,
pour lequel la détermination de la valeur mesurée de la grandeur d'état devant s'effectuer en présence exclusive de gaz, notamment d'air ou d'un produit non fluide, notamment d'eau.

20. Procédé selon au moins l'une des revendications précédentes, lequel procédé comprend l'étape suivante :
- Initiation d'un étalonnage du point zéro du débit massique en présence d'un produit en écoulement, uniquement si la valeur mesurée de débit massique actuellement déterminée est inférieure à 10 %, notamment inférieure à 5 % et de préférence inférieure à 3 % d'un débit massique de référence et si la valeur mesurée de densité actuellement déterminée et/ou la valeur de viscosité actuellement déterminée correspond à celle de l'eau ou de l'air.
